# EUROPÄISCHE PATENTSCHRIFT

(11) **EP 0 673 968 B1**
(45) Veröffentlichungstag und Bekanntmachung des Hinweises auf die Patenterteilung: **03.06.1998**
(21) Anmeldenummer: 95810151.1
(22) Anmeldetag: 08.03.1995
(51) Int. Cl.: C08L 23/08, C08K 3/22

(54) **Unter Wärmeinwirkung fliessstabile Mischung auf Basis von Ethylen Copolymeren**
Composition based on copolymeres of alkylene with less flow at high temperatures
Composition à base de copolymères d'alkylène ayant un flux réduit à hautes températures

(30) Priorität: 24.03.1994 CH 888/94
(43) Veröffentlichungstag der Anmeldung: 27.09.1995
(73) Patentinhaber: Alusuisse Technology & Management AG, 8212 Neuhausen am Rheinfall (CH)
(72) Erfinder: Büchner, Klaus, CH-8200 Schaffhausen (CH)

(56) Entgegenhaltungen:
- EP-A- 0 326 775
- EP-A- 0 334 205
- EP-A- 0 406 035

## Beschreibung

Vorliegende Erfindung betrifft eine polymerhaltige Mischung mit erhöhter Fliessstabilität bei Wärmeeinwirkung.

Polymere oder Kunststoffe sind aufgrund ihrer organischen Struktur immer brennbar. Je nach Verwendungszweck von solchen Polymeren oder Kunststoffen ist diese Brennbarkeit gefährlich und der Anwendung von Kunststoffen hinderlich. Es hat deshalb nicht an Versuchen gefehlt, die Brennbarkeit von Kunststoffen herabzusetzen. Beispielsweise können die Kunststoffe mit anorganischen Substanzen als Füllstoffe vermischt werden. Beispielsweise können Kunststoffe oder Polymere wie Polyvinylchlorid, Polyolefine, Polyamide, Polyester usw. mit Füllstoffen, wie Aluminiumhydroxid, Magnesiumhydroxid, Magnesiumcarbonat, Calciumcarbonat, Siliciumoxiden usw. homogen vermischt werden um die Brennbarkeit der Kunststoffe herabzusetzen. Um eine hinreichende Flammhemmung der Polymere zu erreichen, muss der Füllstoffgehalt sehr stark erhöht werden, wobei ein Füllstoffgehalt von beispielsweise bis 70 Gew.-% erreicht wird. Dies hat natürlich erheblichen Einfluss auf die Eigenschaften der Polymere. Mit dem hohen Füllstoffgehalt geht beispielsweise eine Versprödung und Abnahme der Elastizität der hochgefüllten Polymere, gemessen am Basispolymeren, einher. Für viele Anwendungszwecke ist dies ein Nachteil. Mit zunehmenden Füllstoffmengen sinkt auch die Verarbeitbarkeit der Kunststoffe und Extrusions- oder Kalandrierprozesse lassen sich nur noch schlecht oder überhaupt nicht mehr ausführen.

Füllstoffhaltige Kunststoffe sind in ihrem Brandverhalten in der Regel wesentlich besser, d.h. die Entzündungstemperatur liegt höher und die brennenden Kunststoffe können auch selbstverlöschend sein. Mit zunehmender Erwärmung neigen aber die Kunststoffe zum Schmelzen und sehr oft macht sich das Abtropfen brennender Polymerschmelze negativ bemerkbar. Sehr ausgeprägt ist dieses Verhalten beispielsweise bei Polyolefinen, wie Polyethylen und Polypropylen. Andererseits gehören Kunststoffe aus der Gruppe der Polyolefine zu den bevorzugten Kunststoffen, da sie leicht verarbeitbar sind, für deren Herstellung und Verarbeitung keine schwermetallhaltigen Hilfsmittel benötiget werden, sie sich leicht rezyklieren lassen und im Brandfalle keine toxischen Substanzen freigesetzt werden.

Sohwer entflammbare, aus mehreren Komponenten zusammengesetzte polymerhaltige Mischungen sind aus EP-A-0 326 775, EP-A-0 334 205 und EP-A-0 406 035 bekannt.

Aufgabe vorliegender Erfindung ist es, eine polymerhaltige Mischung vorzuschlagen, welche beispielsweise zu deren Verarbeitung extrudiert oder kalandriert werden kann, welche im Brandfalle nicht oder nur schwer entzündbar ist und unter Hitze- und Feuereinwirkung kein Abtropfen insbesondere brennender Polymerschmelze eintritt.

Erfindungsgemäss wird dies mit einer polymerhaltigen Mischung erreicht, wobei die Gesamtmischung 50 bis 75 Gew.-% Füllstoff und 50 bis 25 Gew.-% einer Polymermischung enthält und die Polymermischung ihrerseits
a) 50 bis 70 Gew.-% Copolymer aus Ethylen mit Acryl- oder Methacrylsäure oder Vinylacetat,
b) 15 bis 25 Gew.-% Terpolymer aus Ethylen, n-Butylacrylat und Kohlenmonoxid und
c) 15 bis 25 Gew.-% Pfropfpolymer aus einem Terpolymer aus Ethylen, n-Butylacrylat und Kohlenmonoxid mit Maleinsäureanhydrid enthält.

Die Prozentzahlen betreffend die Menge an Füllstoff und polymerhaltiger Mischung beziehen sich auf 100 Gew.-% Gesamtmischung. Die Prozentangaben der Polymermischung beziehen sich auf 100 Gew.-% Polymermischung, welche ihrerseits 50 bis 25 Gew.-% der Gesamtmischung ausmacht.

Vorteilhaft enthält die Polymermischung , bezogen auf 100 Gew.-% Polymermischung,
a) 65 Gew.-% Copolymer aus Ethylen mit Acryl- oder Methacrylsäure oder Vinylacetat,
b) 17,5 bis 20 Gew.-% Terpolymer aus Ethylen, n-Butylacrylat und Kohlenmonoxid und
c) 15 bis 17,5 Gew.-% Pfropfpolymer aus einem Terpolymer aus Ethylen, n-Butylacrylat und Kohlenmonoxid mit Maleinsäureanhydrid.

Als Füllstoff wird bevorzugt Aluminiumhydroxid oder Magnesiumhydroxid oder beliebige Mischungen davon, angewendet.

Der Füllstoff kann bis zu 25 Gew.-%, vorzugsweise 12 bis 15 Gew.-%, bezogen auf den Füllstoff, Extenderstoffe der Reihe Calciumcarbonat, Huntit Mg₃Ca(CO₃)_{4,} Hydromagnesit Mg₄(CO₃)₃(OH)₂•2H₂O, basisches Magnesiumcarbonat, Kreide oder Mischungen davon oder Formulierungen enthaltend roten Phosphor angewendet werden. Ein beispielhaftes Gemisch enthält Huntit und Hydromagnesit.

Das Aluminiumhydroxid kann beispielsweise in einer mittleren Korngrösse von 0,7 bis 2,5 Mikrometer und einer minimalen Korngrösse von 0,5 Mikrometer und einer maximalen Korngrösse von 7,0 Mikrometer vorliegen. Der Füllstoff kann in handelsüblicher Form und gegebenenfalls vorgetrocknet eingesetzt werden.

Enthält die polymerhaltige Mischung Extenderstoffe, wie oben erwähnt, so kann beispielsweise ein Calciumcarbonat der mittleren Teilchengrösse von 1 bis 3 µm, bei einer minimalen Teilchengrösse von 0,5 und einer maximalen Teilchengrösse von 7 µm, Huntit und Hydromagnesit der mittleren Teilchengrösse von 0.2 bis 5 µm, bei einer minimalen Teilchengrösse von 0,2 und einer maximalen Teilchengrösse von 7,0 µm oder basisches Magnesiumcarbonat oder Magnesiumhydroxid mit der mittleren Teilchengrösse von 0,5 bis 1,5 µm, bei einer minimalen Teilchengrösse von 0,5 und einer maximalen Teilchengrösse von 3 µm, zum Einsatz gelangen. Wird als Extenderstoff eine Formulierung, enthaltend roten Phosphor eingesetzt, so kann dies in Form eines Masterbatches, beispielsweise mit EVA als polymerem Trägermaterial erfolgen. Der Anteil an Phosphor in %, bezogen auf die Gesamtmischung, beträgt dann zweckmässig 2 bis 5 Gew.-%. Durch synergistischen Effekt kann der Füllstoff-Anteil um mehr als 2 bis 5 Gew.-%, z.B. 4 bis 8 Gew.-%, reduziert werden.

Die erfindungsgemässe, polymerhaltige Mischung kann auch ein Silanvernetzungssystem, resp. die Reaktionsprodukte eines Silanvernetzungssystems,enthalten. Das Silanvernetzungssystem besteht aus einer Silanverbindung, einer Peroxidverbindung und einem Katalysator zur Beschleunigung der Kondensationsreaktion. Als Silanverbindung kann beispielsweise Trimethoxyvinylsilan angewendet werden, welches zwischen dem Füllstoff und den Polymeren der Polymermischung eine Brückenbildung aufbaut Zur Bildung der Brücken werden die Alkoxygruppen hydrolisiert und die gebildeten OH-Gruppen reagieren mit den basischen Bestandteilen der Füllstoffoberfläche unter Kondensation, während in Gegenwart eines Radikalbildners, wie beispielsweise eines Peroxydes, die Vinylgruppe mit den jeweiligen Polymeren reagiert. Durch diese Quervernetzung wird eine nochmals erhöhte Wärmestabilität der polymerhaltigen Mischungen nach vorliegender Erfindung erreicht. Die Silanverbindung, Katalysator und Peroxid können als handelsübliche Mischung angewendet werden oder werden vorzugsweise als Masterbatch mit EVA als polymeres Trägermaterial eingesetzt. Die Wirkstoffe des Silanvernetzungssystems können beispielsweise in Mengen von 0,2 bis 2 Gew.-%, bezogen auf die Gesamtmischung, zugegeben werden.

Im weiteren kann die polymerhaltige Mischung weitere Additive, wie sie beispielsweise zur Verarbeitung in einem Extruder notwendig sind, wie Stabilisatorsysteme und Gleitmittel, z.B. Stearinsäure, Parraffin oder Polyethylenglykol, enthalten. Die polymerhaltige Mischung kann Gleitmittel, wie 0,5 bis 1,5 Gew.-% Stearinsäure oder 0,5 bis 2 Gew.-% Polyethylenglykol einer mittleren Molmasse von etwa 400 enthalten. Die Prozentzahlen sind bezogen auf die Gesamtmischung.

Als Stabilisatoren kommen beispielsweise Antioxidantien in Frage. Geeignete Antioxidantien sind beispielsweise alkylierte Monophenole, alkylierte Hydrochinone, hydroxylierte Thiodiphenylether, Alkyliden-bis-phenole, Benzylverbindungen, Acylaminophenole, Ester der Beta-(3,5-Di-tert.butyl-4-hydroxyphenyl)-propionsäure, Ester der Beta-(5-tert.Butyl-4-hydroxy-3-methylphenyl)-propionsäure, Ester der Beta-(3,5-Dicyclohexyl-4-hydroxyphenyl)propionsäure oder die Amide der Beta-(3,5-Di-tert.butyl-4-hydroxyphenyl)-propionsäure.

Die genannten und weitere Stabilisatoren mit antioxidativer oder säureabfangender Wirkung können zur Erhöhung der Verarbeitungsstabilität der Polymere in der Polymermischung dienen und werden beispielsweise in Mengen von 0,05 bis 0,5 Gew.-%, bezogen auf die Gesamtmischung, zugefügt.

Mit zunehmendem Anteil an Füllstoffen in der polymerhaltigen Mischung steigt die spezifische Dichte. Dies kann zu einer unerwünschten Gewichtszunahme von Produkten enthaltend die polymerhaltige Mischung führen und durch die grossen Materialmengen kann eine Verteuerung der Produkte eintreten. Deshalb kann es zweckmässig sein, die polymerhaltige Mischung nach vorliegender Erfindung mit chemischen oder physikalischen Treibmitteln zu versehen. Als Treibmittel können beispielsweiseAzodicarbonamid, gegbenenfalls mit Zersetzungspunkt erniedrigenden Zusätzen, Hydrazinderivate, wie z.B. 4,4'-Oxybis (benzolsulfohydrazid), oder endotherme Treibmittel, wie z.B. die modifzierten Salze von Polycarbonsäuren, angewendet werden. Andere Treibmittel sind Gase oder verflüssigte Gase, wie z.B. Stickstoff, Kohlendioxid, Fluorchlorkohlenwasserstoffe, Butan oder Propan usw. Die Menge richtet sich nach den Grad der gewünschten Aufschäumung. Die Aufschäumung kann z.B. zu einer Abnahme der Dichte um bis zu 20%, vorzugsweise bis zu 10%, der geschäumten polymerhaltigen Mischung gegenüber der Rohdichte der polymerhaltigen Mischung führen. Das Treibmittel wird in der Regel der polymerhaltigen Mischung nach vorliegender Erfindung beigemischt und bei weiterer Verarbeitung, beispielsweise in einem Extruder oder Autoklaven, wird das Treibmittel aktiviert.

Die Verarbeitung der einzelnen Komponenten zur polymerhaltigen Mischung kann in einer ersten beispielsweisen Ausführungsform derart erfolgen, dass die Polymermischung auf einem Taumelmischer hergestellt und anschliessend die Polymermischung in der Einzugszone eines Extruders zudosiert wird. Der Füllstoff, die Extenderstoffe, sowie allfällige Additive, Stabilisatoren und das Silanvernetzungssystem in Granulatform werden über einen oder zwei Seitendosierungen des Extruders zudosiert. Am Ende des Extruders wird die polymerhaltige Mischung gemäss vorliegender Erfindung z.B. durch eine Breitschlitzdüse als plattenförmiges Material ausgetragen. In einer zweiten beispielhaften Ausführungsform wird wie beschrieben verfahren, jedoch anstelle der Breitschlitzdüse eine Granulierdüse angewendet und ein Granulat (Compound) erzeugt. Anschliessend wird in einer zweiten Stufe zur Verarbeitung des Granulates zu Formkörpern ein Einschneckenextruder mit Breitschlitzdüse eingesetzt. Das Silanvernetzungssystem kann in der ersten als auch der zweiten Stufe eingearbeitet werden.

Aus der erfindungsgemässen polymerhaltigen Mischung können beispielsweise durch Extrusion oder durch Kalandrieren plane oder gebogene Platten oder Profile, Hohlprofile, Röhren etc. in einer Dicke oder Wandstärke von beispielsweise 1 bis 5 mm, vorzugsweise von 1,5 bis 4 mm, hergestellt werden. Die Verarbeitungstemperatur liegt in der Regel zwischen 100 und 170°C und bevorzugt bei der Extrusion bei 130 bis 150°C. Die Teile in Form von Platten etc. können als Bauteile verwendet werden oder durch Bearbeitung zu Bauteilen weiter verarbeitet werden.

Deshalb umfasst vorliegende Erfindung auch Bauteile enthaltend die erfindungsgemässen polymerhaltigen Mischungen. Zweckmässig werden aus den polymerhaltigen Mischungen plattenförmige Formstücke hergestellt, welche zu mehrschichtigen Verbundplatten weiter verabeitet werden, wobei wenigstens eine Schicht die erfindungsgemässe polymerhaltige Mischung enthält. Solche mehrschichtigen Verbundplatten können beispielsweise eine oder zwei Deckschichten aus Kunststoff oder Metall, wobei Metall bevorzugt ist, enthalten. Bevorzugt sind mehrschichtige Verbundplatten, enthaltend Deckschichten aus Metall, vorzugsweise Aluminium oder dessen Legierungen, und wenigstens eine Kernschicht aus der erfindungsgemässen polymerhaltigen Mischung. Derartige Verbundplatten können beispielsweise Deckschichten aus Metall in einer Dicke von 0,2 bis 1,0 mm und eine Kernschicht aus der erfindungsgemässen polymerhaltigen Mischung in einer Dicke von 1,5 bis 4 mm enthalten.

Solche Bauteile und insbesondere Verbundplatten eignen sich aufgrund ihrer hohen Feuerfestigkeit, beispielsweise als Fassaden-, Wand-, Boden- oder Deckenplatten in Hochbauten, als Wand-, Boden- oder Deckenplatten in Transportmitteln, wie Fahrzeugen oder Schiffen oder als Stell- oder Dekorationswände, Schautafeln, Austellungselemente etc.

## Patentansprüche

1. Polymerhaltige Mischung mit erhöhter Fliessstabilität bei Wärmeeinwirkung,
dadurch gekennzeichnet, dass
die Gesamtmischung 50 bis 75 Gew.-% Füllstoff und 50 bis 25 Gew.-% einer Polymermischung enthält und die Polymermischung
a) 50 bis 70 Gew.-% Copolymer aus Ethylen mit Acryl- oder Methacrylsäure oder Vinylacetat,
b) 15 bis 25 Gew.-% Terpolymer aus Ethylen, n-Butylacrylat und Kohlenmonoxid und
c) 15 bis 25 Gew.-% eines Propfpolymers aus einem Terpolymer aus Ethylen, n-Butylacrylat und Kohlenmonoxid mit Maleinsäureanhydrid enthält.

2. Polymerhaltige Mischung gemäss Anspruch 1, dadurch gekennzeichnet, dass die Polymermischung
a) 65 Gew.-% Copolymer aus Ethylen mit Acryl- oder Methacrylsäure oder Vinylacetat,
b) 17,5 bis 20 Gew.-% Terpolymer aus Ethylen, n-Butylacrylat und Kohlenmonoxid und
c) 15 bis 17,5 Gew.-% eines Propfpolymers aus einem Terpolymer aus Ethylen, n-Butylacrylat und Kohlenmonoxid mit Maleinsäueranhydrid enthält.

3. Polymerhaltige Mischung gemäss Anspruch 1, dadurch gekennzeichnet, dass der Füllstoff Aluminiumhydroxid oder Magnesiumhydroxid oder Gemische davon enthält oder daraus besteht.

4. Polymerhaltige Mischung gemäss Anspruch 1, dadurch gekennzeichnet, dass der Füllstoff zusätzlich bis zu 25 Gew.-% Extenderstoffe der Reihe des Calciumcarbonates, Huntits, Hydromagnesits, basischen Magnesiumcarbonates oder Mischungen davon oder Formulierungen enthaltend roten Phosphor enthält.

5. Polymerhaltige Mischung gemäss Anspruch 4, dadurch gekennzeichnet, dass die Extenderstoffe in Mengen von 12 bis 15 Gew.-% im Füllstoff enthalten sind.

6. Polymerhaltige Mischung gemäss Anspruch 1, dadurch gekennzeichnet, dass die Mischung ein Silanvernetzungssystem enthält.

7. Bauteile enthaltend polymerhaltige Mischungen nach Anspruch 1.

8. Bauteile in Form von mehrschichtigen Verbundplatten enthaltend in wenigstens einer Schicht polymerhaltige Mischungen nach Anspruch 1.

9. Bauteile in Form von mehrschichtigen Verbundplatten enthaltend Deckschichten aus Metall, vorzugsweise Aluminium oder seine Legierungen, und wenigstens eine Kernschicht aus polymerhaltigen Mischungen nach Anspruch 1.

## Claims

1. Polymer-containing mixture with high flow resistance at high temperatures,
characterised in that the entire mixture contains 50 to 75 % by weight filler and 50 to 25 % by weight of a polymer mixture and the polymer mixture contains
a) 50 to 70 % by weight copolymer of ethylene with acrylic or methacrylic acid or vinyl acetate,
b) 15 to 25 % by weight terpolymer of ethylene, n-butyl acrylate and carbon monoxide and
c) 15 to 25 % by weight of a graft polymer of a terpolymer of ethylene, n-butyl acrylate and carbon monoxide with maleic anhydride.

2. Polymer-containing mixture according to claim 1, characterised in that the polymer mixture contains
a) 65 % by weight copolymer of ethylene with acrylic or methacrylic acid or vinyl acetate,
b) 17.5 to 20 % by weight terpolymer of ethylene, n-butyl acrylate and carbon monoxide and
c) 15 to 17.5 % by weight of a graft polymer of a terpolymer of ethylene, n-butyl acrylate and carbon monoxide with maleic anhydride.

3. Polymer-containing mixture according to claim 1, characterised in that the filler contains or consists of aluminium hydroxide or magnesium hydroxide or mixtures thereof.

4. Polymer-containing mixture according to claim 1, characterised in that the filler additionally contains up to 25 % by weight extenders from the series consisting of calcium carbonate, huntite, hydromagnesite, basic magnesium carbonate or mixtures thereof or formulations containing red phosphorus.

5. Polymer-containing mixture according to claim 4, characterised in that the extenders are contained in the filler in quantities of 12 to 15 % by weight.

6. Polymer-containing mixture according to claim 1, characterised in that the mixture contains a silane cross-linking system.

7. Components containing polymer-containing mixtures according to claim 1.

8. Components in the form of multi-layer composite panels containing polymer-containing mixtures according to claim 1 in at least one layer.

9. Components in the form of multi-layer composite panels containing outer layers of metal, preferably aluminium or alloys thereof, and at least one core layer of polymer-containing mixtures according to claim 1.

## Revendications

1. Mélange contenant des polymères à stabilité à l'écoulement augmentée lors de l'application de chaleur, caractérisé en ce que :
a) le mélange total contient 50 à 75% en masse de charge et 50 à 25% en masse d'un mélange de polymères, et le mélange de polymères contient 50 à 70% en masse de copolymère d'éthylène avec l'acide acrylique ou méthacrylique ou l'acétate de vinyle,
b) 15 à 25% en masse de terpolymère d'éthylène, d'acrylate de n-butyle et de monoxyde de carbone et
c) 15 à 25% en masse d'un polymère greffé d'un terpolymére d'éthylène, d'acrylate de n-butyle et de monoxyde de carbone avec de l'anhydride maléique.

2. Mélange contenant des polymères selon la revendication 1,
caractérisé en ce que le mélange de polymères contient
a) 65% en masse de copolymère d'éthylène avec l'acide acrylique ou méthacrylique ou l'acétate de vinyle,
b) 17,5% à 20% en masse de terpolymère d'éthylène, d'acrylate de n-butyle et de monoxyde de carbone et
c) 15 à 17,5% en masse d'un polymère greffé d'un terpolymère d'éthylène, d'acrylate de n-butyle et de monoxyde de carbone avec de l'anhydride maléique.

3. Mélange contenant des polymères selon la revendication 1,
caractérisé en ce que la charge contient ou consiste en hydoxyde d'aluminium ou hydroxyde de magnésium ou des mélanges de ceux-ci.

4. Mélange contenant des polymères selon la revendication 1,
caractérisé en ce que la charge contient en outre jusqu'à 25% en masse de diluants de la série du carbonate de calcium, de la huntite, de l'hydromagnésite, du carbonate de magnésium basique ou de mélanges de ceux-ci ou des formulations contenant du phosphore rouge.

5. Mélange contenant des polymères selon la revendication 4,
caractérisé en ce que les diluants sont contenus dans la charge en des quantités de 12 à 15% en masse.

6. Mélange contenant des polymères selon la revendication 1,
caractérisé en ce que le mélange contient un système de réticulation par silane.

7. Eléments de construction contenant des mélanges contenant des polymères selon la revendication 1.

8. Eléments de construction sous forme de plaques composites multicouches contenant dans au moins une couche des mélanges contenant des polymères selon la revendication 1.

9. Eléments de construction sous forme de plaques composites multicouches contenant des couches de revêtement en métal, de préférence en aluminium ou en ses alliages, et au moins une couche centrale en mélanges contenant des polymères selon la revendication 1.
